# EUROPEAN PATENT SPECIFICATION

(11) **EP 0 393 283 B1**
(45) Date of publication and mention of the grant of the patent: **18.11.1993**
(21) Application number: 89312916.3
(22) Date of filing: 11.12.1989
(51) Int. Cl.: F02C 7/04, B64C 11/14

(54) **A ducted fan gas turbine engine with a spinner.**
Mantelgebläsetriebwerk mit einer Nasenhaube.
Soufflante canalisée d'une turbine à gaz avec un pot d'hélice.

(30) Priority: 28.02.1989 GB 8904478
(43) Date of publication of application: 24.10.1990
(73) Proprietor: ROLLS-ROYCE plc, London, SW1E 6AT (GB)
(72) Inventor: Nicholas, David John, Mickleover Derby (GB); Mortimer, Tony Frederick, Breaston Derby (GB)
(74) Representative: Gunn, Michael Alan

(56) References cited:
- EP-A- 0 111 785
- EP-A- 0 266 263
- EP-A- 0 298 014
- US-A- 4 220 171
- JOURNAL OF AIRCRAFT. vol. 20, no. 5, May 1983, NEW YORK US pages 411 - 417; B.H.Little Jr.: "Propulsion system installation design for high-speed prop-fans."

## Description

This invention relates to a ducted fan gas turbine engine and is particularly concerned with the air intake of such an engine.

In the quest for improved efficiency and low specific fuel consumption, ducted fan gas turbine engines have been designed with fans which provide very high by-pass ratios. EP0298014A discloses a typical ducted fan gas turbine engine in which a fan enclosed within a duct is driven by the core of the engine. The air intake of the core of the engine is located immediately downstream of the fan.

Improvements in fan technology, for instance the introduction of wide chord fan blades, which have permitted the introduction of such high by-pass ratio engines, have meant that single stage fans, that is fans including a single rotatable annular array of fan blades, are now capable of coping with an air flow rate which is within 4 to 5% of the maximum rate which is theoretically attainable.

It has been found that when ducted fans operate at the very high air flow rates associated with modern high by-pass ratio ducted fan gas turbine engines, the region of the fan closest to its hub experiences adverse air flow conditions under conditions of high engine powers and high fan speeds which result in an undesirably large air pressure drop across the fan hub region. There are a number of reasons why this occurs, one of the most important of which is the degree of local internal streamline curvature of the fan duct immediately upstream of the fan blade tips. Typically the curvature, which is intended to provide a certain degree of air flow diffusion within the air intake, is such that axial velocity of the air flow in this region is reduced. This, however, has the effect of increasing the axial air flow velocity in the hub region of the fan leading in turn to a certain degree of air flow choking in that region. The effect is compounded to a certain extent in the case of fan ducts having intake mouths which are configured so as to be downwardly inclined by several degrees relative to the engine axis. This is necessary in order for the intake to match the designed attitude of the aircraft powered by the engines.

The amount of modification to the aerodynamic profiles of the fan blades in their hub regions to counter such air flow choking is severely limited by constraints which are imposed by the fan blades themselves. For instance, the hub regions of the fan blades must be relatively thick in order to satisfy fan blade stress design criteria and provide aerodynamic stability.

It has been found that the large pressure reductions which have been encountered in the hub regions of fan blades have had adverse effects upon the operation of other parts of the engine. Thus it is air from the hub region of the fan which is subsequently directed into the core of the engine for passage through the usual gas turbine gas generator cycle. Consequently the compressors of the engine have not received their designed air flow at the correct pressure and this in turn has led to an undesirable increase in temperatures in the turbines of the engine and a decrease in overall engine operating efficiency.

It is an object of the present invention to provide a ducted fan gas turbine engine in which such air flow choking in the region of the fan hub is reduced or substantially eliminated thereby providing an improvement in engine efficiency.

According to the present invention, a ducted fan gas turbine engine comprises a core which drives a fan for the air intake of said engine, the core of said engine having an air inlet immediately downstream of said fan, said fan comprises a hub having an upstream end and carrying an annular array of radially extending aerofoil blades and a spinner, said spinner comprising an axisymmetric body having an axis of revolution and an upstream end and a downstream end with respect to an operational flow of air thereover, said downstream end of said spinner being attached to the upstream end of said hub so as to be immediately upstream of said array of aerofoil blades and additionally so configured as to be generally radially outwardly flared with respect to said axis of revolution and with respect to the portion of said spinner immediately upstream of said radially outwardly flared portion thereof to an extent sufficient to reduce the local axial velocity of said air operationally flowing thereover immediately prior to said air flowing over the radially inward regions of said array of aerofoil blades.

The reduction in local axial flow velocity of air entering the radially inward regions of the aerofoil blade array ensures that the possibility of air flow choking in the fan hub is reduced.

The invention will now be described, by way of example, with reference to the accompanying drawings in which:-
Figure 1 is a sectioned side view of the upper half of a ducted fan gas turbine engine in accordance with the present invention.
Figure 2 is an enlarged sectioned side view of the air intake of the ducted fan gas turbine engine shown in Figure 1.
Figure 3 is a schematic side view of the spinner of the ducted fan gas turbine engine shown in Figure 1.
Figure 4 is a graph indicating the relationship between the axial velocity of air entering the fan and the fan radius at which the air velocity is measured in respect of two ducted fan gas turbine engines: one having a fan which is in accordance with the present invention and one having a fan which is not in accordance with the present invention.
Figure 5 is a graph indicating the relationship between the hub pressure ratio across the fan and the radius at which the pressure ratio is measured between the fan hub and the splitter downstream of the fan in respect of two ducted fan gas turbine engines: one having a fan which is in accordance with the present invention and one having a fan which is not in accordance with the present invention.

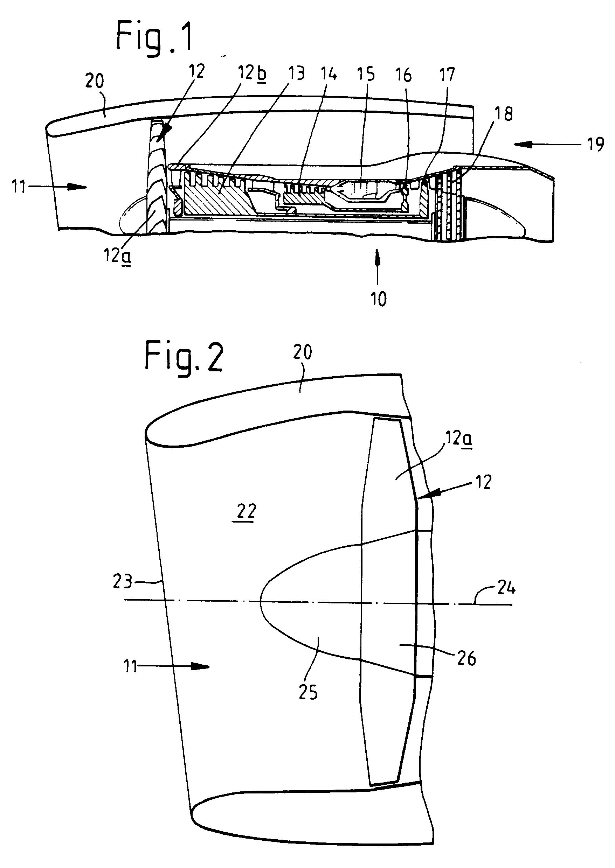

With reference to Figure 1, a ducted fan gas turbine engine generally indicated at 10 is of conventional construction and comprises, in axial flow series, an air intake 11, a fan 12 comprising an annular array of radially extending fan blades 12a, an airflow splitter 12b, an intermediate pressure compressor 13, a high pressure compressor 14, combustion equipment 15, a high pressure turbine 16 drivingly connected to the high pressure compressor 14, an intermediate pressure compressor 17 drivingly connected to the intermediate pressure compressor 13, a low pressure compressor 18 drivingly connected to the fan 12 and a propulsion nozzle 19. The fan 12 and a major proportion of the engine 10 are enclosed by a fan casing 20 so that an annular fan duct 21 is defined between the engine 10 and casing 20.

The gas turbine engine 10 functions in the conventional manner whereby air entering the engine through its intake 11 is compressed by the fan 12. The splitter 12b ensures that part of the air flow exhausted from the fan 12 continues its passage through the fan duct 21 to ultimately provide propulsive thrust while the remainder is directed into the intermediate and high pressure compressors 13 and 14 where further compression takes place. The compressed air is mixed with fuel in the combustion equipment 15 and the mixture combusted. The resultant hot combustion products then expand through the high, intermediate and low pressure turbines 16,17 and 18 before being exhausted to atmosphere through the exhaust nozzle 19 where they mix with air exhausted from the fan duct 21 to provide propulsive thrust.

The fan casing 20 terminates some way upstream of the fan 12 as can be seen more easily if reference is made to Figure 2. This is done so as to ensure that an enclosed region 22 is defined upstream of the fan 12 in which air entering the intake 11 is diffused prior to being acted upon by the fan 12. Diffusion is necessary to ensure that the velocity of the air is matched to the characteristics of the fan 12 and is achieved by ensuring that the cross-sectional area of the region 22 progressively increases in the direction of air flow as can be seen in the drawing. It will also be seen from Figure 2 that the plane of the mouth 23 of the air intake 11 is downwardly inclined with respect to the axis of rotation 24 of the fan 12 so that in normal level flight of an aircraft powered by the engine 10 in which the aircraft adopts a slightly "nose-up" attitude, the plane of the intake mouth 23 is normal to the direction of flight. This inclination of the intake mouth 23 plane results in the uppermost portions of the intake region 22 of the fan casing 20 having to be provided with a greater degree of internal curvature than the lower portions as can be clearly seen in Figure 2 in order to provide the necessary air flow diffusion.

A further feature which facilitates the correct air flow into the fan 12 is a spinner 25 which is coaxially attached to, and therefore rotates with, the fan hub 26. The spinner 25 is an axisymmetric body which forms part of the fan 12 and is intended to facilitate a re-direction of the air flow through the central region of the intake over the radially inner regions of the fan blades 12a.

These features all contribute to a slowing down of the air flow in the radially outer reaches of the intake region 22 and this in turn leads to a corresponding acceleration of the air flow flowing over the spinner 25 and in turn over the radially inner regions of the fan blades 12a. Conventionally this can lead to the radially inner regions of the fan blades 12a being over-supplied with air which in turn leads to air flow choking in that fan 12 portion.

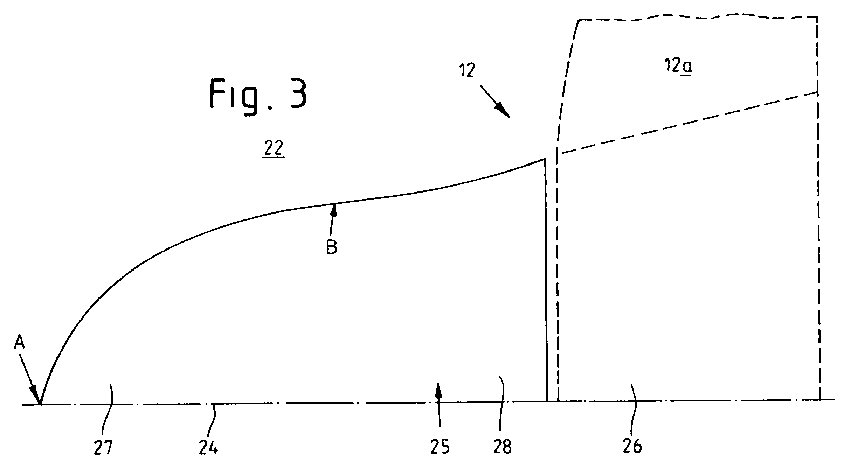

The present invention is directed to reducing or eliminating this choking of the radially inner portion of the fan 12 by the reduction of the local axial velocity of air flowing over the radially inward regions of the fan blades 12a. This is achieved by modifying the profile of the spinner 25 in a novel manner as can be seen more easily if reference is now made to Figure 3.

The spinner 25 has upstream and downstream ends 27 and 28 respectively with respect to the flow of air through the air inlet portion 22. The downstream end 28 is of greatest diameter and is attached (by means not shown) to the upstream end of the fan hub 26. The portion of the spinner 25 extending from the upstream end 27 thereof may be of any convenient form such as conical but in this particular case is of generally elliptical cross-sectional shape in an axial sense from its most upstream point A to position B which is some way past the spinner axial mid position. The major axis of the ellipse is the axis of rotation 24 of the spinner 25. The effect of this spinner 25 configuration is to create a boundary layer of air flowing over the spinner 25 which has a local axial component of flow and which, by virtue of the elliptical cross-sectional shape of this portion of the spinner 25, is axially accelerated. This results in a reduction in the thickness of the boundary layer. However, as previously indicated, air passing over the radially inner regions of the fan blades 12a with a high axial velocity is undesirable. Consequently in order to reduce the axial velocity of this air flow, the downstream end 28 of the spinner 25, is curved in the opposite direction to that of the spinner 25 portion upstream of the position B. Thus the downstream end 28 of the spinner 25 is configured so as to be radially outwardly flared both with respect to the axis of rotation 24 of the spinner 25 and with respect to the portion of the spinner 25 which is upstream of the flared portion. The axial extent of the flared portion of the spinner 25 is so arranged as to be generally equal to the axial extent of the fan 12 in its hub region. The effect of this radially outward flaring of the downstream end 28 of the spinner 25 is to reduce the local axial velocity of the air flow over the spinner after its boundary layer thickness has been reduced and prior to it flowing over the radially inward regions of the fan blades 12a to an extent sufficient to reduce or eliminate the incidence of choking of the air flow in those regions.

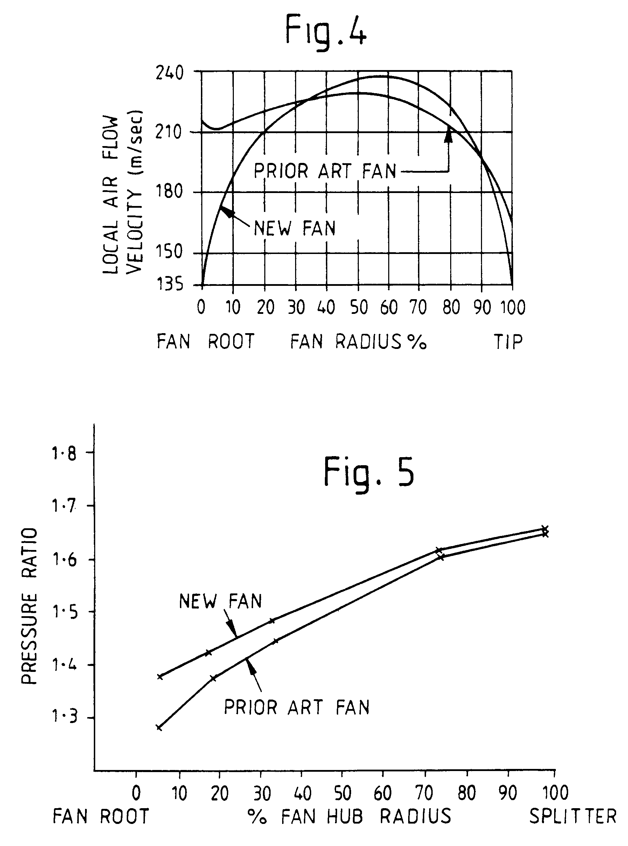

In tests carried out using a ducted fan gas turbine engine 10 fitted with a fan 12 in accordance with the present invention and a similar ducted fan gas turbine provided with a conventional prior art fan with a conical spinner, it has been found that the local axial velocity of the air flow into the radially inner regions of the engine's fan blades 12a is reduced by 40% in the case of the engine provided with the fan 12 in accordance with the present invention compared with that of the engine provided with the conventional fan. This reduction in the local axial velocity of the air flow can be seen more clearly if reference is made to the graph shown in Figure 4. It can be seen from the graph that in the radially inner root region of the fan in accordance with the present invention, the air flow velocity is considerably less than that in the case of the fan provided with the conventional prior art spinner. However at locations radially outwardly of the root region, the air flow velocities in both fans tend to be very similar. Clearly therefore the use of fans in accordance with the present invention does not result in detrimental air flow velocity effects at locations radially outwardly of the fan root region.

The graph shown in Figure 5 indicates the desirable effect which the use of fans in accordance with the present invention has upon the pressure ratio across the fan 12. It will be seen that at locations at or near the radially inner root region of the fan 12 the pressure ratio across the fan 12 is significantly higher in the case of the fan in accordance with the present invention than it is with the conventional prior art fan.

It is clear from the above results that fans in accordance with the present invention are characterised by a significant improvement in performance in the radial inner regions of the fan. Thus we have found that the use of a ducted fan gas turbine engine having a fan in accordance with the present invention has, compared with the use of a conventional prior art fan on a similar engine, resulted in such improved radial pressure profile downstream of the fan. This in turn has resulted in more efficient operation of the intermediate pressure compressor of the engine and, as a consequence, gas temperatures within the engine's turbines have been reduced by 15 - 20°C and there have been improvements in specific fuel consumption under take-off and maximum climb conditions of between 1.3 and 2.5%.

Although the present invention has been described with reference to a fan 12 having a spinner 25, the downstream end 28 of which is outwardly curved so as to define the desired flare, it will be appreciated that a flare of frusto-conical form could in certain circumstances be utilised if so desired.

## Claims

1. A ducted fan gas turbine (10) engine comprising a core (13-18) which drives a fan (12) for the air intake (11) of said engine (10), the core (13-18) of said engine (10) having an air inlet immediately downstream of said fan (12) said fan (12) comprising a hub (26) having an upstream end and carrying an annular array of radially extending aerofoil blades (12a) and a spinner (25), said spinner (25) comprising an axisymmetric body having an axis of revolution and an upstream end (27) and a downstream end (28) with respect to an operational flow of air thereover, said downstream end (28) of said spinner (25) being attached to the upstream end of said hub (26) so as to be immediately upstream of said array of aerofoil blades (12a) characterised in that said spinner (25) is additionally so configured that its downstream end (28) is generally radially outwardly flared with respect to said axis of revolution (24) and with respect to the portion of said spinner (25) immediately upstream of said radially outwardly flared portion (28) thereof to an extent sufficient to reduce the local axial velocity of said air operationally flowing thereover immediately prior to said air flowing over the radially inward regions of said array of aerofoil blades (12a).

2. A ducted fan gas turbine engine as claimed in claim 1 characterised in that a region of said axisymmetric body (25) extending from said upstream end thereof is of generally elliptical cross-sectional shape, the axis of revolution of said body (25) constituting the major axis of said elliptical cross-sectional shape.

3. A ducted fan gas turbine engine as claimed in claim 2 characterised in that said region of said body (25) which is of generally elliptical cross-sectional shape extends between said upstream end of said body (25) and said generally outwardly flared body portion (28).

4. A ducted fan gas turbine engine as claimed in any one preceding claim characterised in that the axis of revolution of said spinner (25) is coaxial with the longitudinal axis of said engine (10).

5. A ducted fan gas turbine engine as claimed in any one preceding claim characterised in that the axial extent of the flared portion (28) of said spinner (25) is generally equal to the axial extent of said fan (12) in its hub region (26).

6. A ducted fan gas turbine engine as claimed in any one preceding claim characterised in that said fan (12) is located in a fan duct defined by a fan casing (20), said fan casing (20) extending upstream of said fan (12) to define an air intake mouth (23), said casing (20) being so internally configured as to diffuse the air flow operationally passing through said air intake mouth (23) and into said fan (12).

7. A ducted fan gas turbine engine as claimed in claim 6 characterised in that the plane of said air intake mouth (23) is downwardly inclined with a respect to the longitudinal axis (24) of said engine (10).

## Patentansprüche

1. Mantelgebläsetriebwerk (10) mit einem Kern (13-18), der einen Fan (12) für einen Lufteinlaß (11) des Triebwerks (10) antreibt, wobei der Kern (13-18) des Triebwerks (10) einen Lufteinlaß unmittelbar stromab des Fan (12) besitzt und der Fan (12) eine Nabe (26) mit einem stromaufwärtigen Ende aufweist, die eine ringförmige Anordnung radial verlaufender stromlinienförmiger Schaufeln (12a) und eine Nasenhaube (25) trägt, wobei die Nasenhaube (25) aus einem achssymmetrischen Körper besteht, der eine Drehachse und ein bezüglich der hindurchströmenden Arbeitsluftströmung stromaufwärtiges Ende (27) und ein stromabwärtiges Ende (28) aufweist, an welchem das stromaufwärtige Ende der Nabe (26) so anschließt, daß die Nasenhaube unmittelbar stromauf der ringförmigen Anordnung von stromlinienförmigen Schaufeln (12a) befindlich ist,
dadurch gekennzeichnet, daß die Nasenhaube (25) außerdem so ausgebildet ist, daß ihr stromabwärtiges Ende (28) allgemein radial nach außen erweitert gegenüber der Drehachse (24) und gegenüber jenem Abschnitt der Nasenhaube (25) unmittelbar stromauf des radial erweiterten Abschnitts (28) ausgebildet ist, wobei das Ausmaß der Erweiterung genügt, um die örtliche Axialgeschwindigkeit der Luft, die betriebsmäßig darüberströmt, zu vermindern, unmittelbar bevor diese Luft über die radial inneren Bereiche der ringförmigen Anordnung von stromlinienförmigen Schaufeln (12a) strömt.

2. Mantelgebläsetriebwerk nach Anspruch 1,
dadurch gekennzeichnet, daß ein Bereich des achssymmetrischen Körpers (25), der sich von seinem stromaufwärtigen Ende her erstreckt, eine allgemein elliptische Querschnittsgestalt besitzt, wobei die Drehachse des Körpers (25) die Hauptachse der elliptischen Querschnittsgestalt bildet.

3. Mantelgebläsetriebwerk nach Anspruch 2,
dadurch gekennzeichnet, daß jener Bereich des Körpers (25), der einen allgemein elliptischen Querschnitt besitzt, sich zwischen dem stromaufwärtigen Ende des Körpers (25) und dem sich allgemein nach außen erweiternden Teil (28) erstreckt.

4. Mantelgebläsetriebwerk nach einem der vorhergehenden Ansprüche,
dadurch gekennzeichnet, daß die Drehachse der Nasenhaube (25) koaxial zur Längsachse des Triebwerks (10) verläuft.

5. Mantelgebläsetriebwerk nach einem der vorhergehenden Ansprüche,
dadurch gekennzeichnet, daß die axiale Erstreckung des sich erweiternden Abschnitts (28) der Nasenhaube (25) etwa gleich ist in der Länge der axialen Erstreckung des Gebläses (12) in seinem Nabenbereich (26).

6. Mantelgebläsetriebwerk nach einem der vorhergehenden Ansprüche,
dadurch gekennzeichnet, daß der Fan (12) in einem Fankanal umläuft, der durch ein Fangehäuse (20) definiert ist, daß das Gehäuse (20) sich stromauf des Gebläses (12) so erstreckt, daß eine Lufteinlaßmündung (23) gebildet wird und daß das Gehäuse (20) innen so ausgebildet ist, daß die Luftströmung, die betriebsmäßig durch die Lufteinlaßmündung (23) und in den Fan (12) eintritt, ausgebreitet bzw. diffundiert wird.

7. Mantelgebläsetriebwerk nach Anspruch 6,
dadurch gekennzeichnet, daß die Ebene der Lufteinlaßmündung (23) nach unten gegenüber der Längsachse (24) des Triebwerks (10) geneigt ist.

## Revendications

1. Moteur (10) à turbine à gaz à soufflante canalisée comprenant un noyau (ensemble haute pression) (13-18) qui entraîne une soufflante (12) pour l'entrée d'air (11) dudit moteur (10), le noyau (13-18) dudit moteur ayant une entrée d'air immédiatement en aval de ladite soufflante (12), ladite soufflante (12) comprenant un moyeu (26) ayant une extrémité amont et supportant une rangée annulaire de pales aérodynamiques (12a) porteuses s'étendant radialement et un cône de pénétration (25), ledit cône (25) comprenant un corps symétrique axialement ayant un axe de révolution et une extrémité amont (27) et une extrémité aval (28) par rapport à un écoulement opérationnel d'air, ladite extrémité amont (28) dudit cône étant fixée à l'extrémité amont (28) dudit moyeu (27) de façon à être immédiatement en amont de ladite rangée de pales aérodynamiques (12a), caractérisé en ce que ledit cône (25) est en outre réalisé de telle sorte que son extrémité aval (28) est généralement évasée radialement vers l'extérieur par rapport audit axe de révolution (24) et par rapport à la partie dudit cône (25) immédiatement en amont de ladite partie évasée (28) radialement vers l'extérieur de celui-ci de façon suffisante pour réduire la vitesse axiale locale dudit air s'écoulant opérationnellement dessus immédiatement avant que ledit air ne s'écoule sur les zones de ladite rangée de pales aérodynamiques (12a) s'étendant radialement vers l'intérieur.

2. Moteur à turbine à gaz à soufflante canalisée selon la revendication 1, caractérisé en ce qu'une zone dudit corps symétrique axialement (25) s'étendant à partir de ladite extrémité amont de celui-ci présente une section transversale de forme généralement elliptique, l'axe de révolution dudit corps (25) constituant le grand axe de la section transversale de forme elliptique.

3. Moteur à turbine à gaz à soufflante canalisée selon la revendication 2, caractérisé en ce que ladite zone dudit corps (25) qui est générelement de forme elliptique en section transversale s'étend entre ladite extrémité amont dudit corps (25) et ladite partie (28) du corps généralement évasée vers l'extérieur.

4. Moteur à turbine à gaz à soufflante canalisée selon l'une quelconque des revendications précédentes, caractérisé en ce que l'axe de révolution dudit cône (25) et l'axe longitudinal dudit moteur (10) sont coaxiaux.

5. Moteur à turbine à gaz à soufflante canalisée selon l'une quelconque des revendications précédentes, caractérisé en ce que l'étendue axiale de la partie évasée (28) dudit cône (25) est sensiblement égale à l'étendue axiale de ladite soufflante (12) dans la zone de son moyeu (26).

6. Moteur à turbine à gaz à soufflante canalisée selon l'une quelconque des revendications précédentes, caractérisé en ce que ladite soufflante (12) est située dans un conduit de soufflante défini par un carter (20) de soufflante, ledit carter (20) de soufflante s'étendant en amont de ladite soufflante (12) pour définir une bouche (23) d'entrée d'air, ledit carter (20) étant réalisé à l'intérieur de façon à diffuser l'écoulement d'air passant opérationnellement au travers de ladite bouche (23) d'entrée d'air et dans ladite soufflante (12).

7. Moteur à turbine à gaz à soufflante canalisée selon la revendication 6, caractérisé en ce que le plan de ladite bouche (23) d'entrée d'air est inclinée vers le bas par rapport à l'axe longitudinal dudit moteur (10).
